# EUROPEAN PATENT SPECIFICATION

(11) **EP 0 922 931 B1**
(45) Date of publication and mention of the grant of the patent: **20.02.2002**
(21) Application number: 97119498.0
(22) Date of filing: 07.11.1997
(51) Int. Cl.: G01B 11/24

(54) **Shape detection device and method for detecting the shape of a moving object**
Einrichtung zur Formerfassung und Verfahren zur Erfassung der Form eines sich bewegenden Objekts
Dispositif de détection de forme et méthode pour détecter la forme d'un objet allongé en mouvement

(43) Date of publication of application: 16.06.1999
(73) Proprietor: Automation W + R GmbH, 80639 München (DE)
(72) Inventor: Weingartner, Albin, Dipl.-Ing., 80796 München (DE); Mitzkus, Norbert, 80999 München (DE)
(74) Representative: von Fischern, Bernhard, Dipl.-Ing.

(56) References cited:
- EP-A- 0 676 635
- GB-A- 2 141 542
- US-A- 4 775 235
- PATENT ABSTRACTS OF JAPAN vol. 011, no. 103 (P-562), 2 April 1987 -& JP 61 253410 A (PILOT PEN CO LTD:THE), 11 November 1986
- PATENT ABSTRACTS OF JAPAN vol. 010, no. 327 (P-513), 7 November 1986 -& JP 61 133844 A (SHIN MEIWA IND CO LTD), 21 June 1986

## Description

The present invention relates to a shape detection device and method for imaging a moving elongated object.

GB-A-2 141 542 shows a device for the inspection of cigarettes which are successively moved through an inspection apparatus. Said inspection apparatus comprises two monitoring means each having a two-dimensional array with elements arranged in a matrix of horizontal and vertical lines. When a cigarette as an elongated object moves with respect to either one of said monitoring means, line images of the cigarette are captured by vertical lines of said array at line-shaped sensing positions. Opposite halfs of a circumferential surface of the cigarette are successively exposed to inspection light when the cigarette is successively supported by one or the other of two rotatable conveyors, respectively, which are arranged so as to enable transfer of the cigarette from the one to the other of said two conveyors.

Furthermore, conventional shape detection devices for detecting a shape of a moving object generally photograph the object by means of a television camera or a two-dimensional CCD camera with a high speed shutter, display the image photographed by the television camera or two-dimensional CCD camera on a monitoring television receiver, and process the image by image processing means, thereby judging the shape. Such an inspection device is disclosed in JP-A-61-133 844. This inspection device comprises a light source and a television camera on opposite sides of a bi-directional path on which a cable portion to be inspected is moved by means of a pivoting arm, and a photosensor including a light projector and a light receiver on opposite sides thereof for detecting a photographing timing for the cable portion to be inspected. The photosensor detects the cable portion passing therethrough, and the light source emits light in response to the detection output of the photosensor. The television camera photographs the silhouette image of the cable portion to be inspected, and an image processor captures and processes the silhouette image.

The silhouette image detected by the television camera comprises no information on the shape of the parts of the cable portion directly facing the camera. That is, form features or defects of the cable portion such as strands bent away from a main axis of said cable portion on a part of the cable portion directly facing the camera, or facing away from the camera, cannot be detected. Therefore, no reliable inspection can be effected. In addition to that, it appears that the device as suggested in the prior art is necessarily complicated and expensive, as the use of a high speed shutter in combination with a photosensor, together with the use of a television camera or a two-dimensional CCD array, is expensive.

It is the object of the present invention to provide a reliable shape detection device and method for imaging a moving elongated object, operating with a comparatively low blind angle for the detection, and enabling a simple structure which can be produced at low cost.

This object of the invention is solved by a shape detection device and method for imaging a moving elongated object with the features of claim 1 or claim 15, respectively.

Further improvements according to the invention become apparent from the dependent claims.

The invention and advantages achievable by the invention are more fully disclosed and understood from preferred embodiments of the invention which are described hereinafter with reference to the accompanying drawings.

In the drawings,
- Fig. 1: shows a first embodiment of the shape detection device for detecting a moving object according to the present invention;
- Fig. 2: shows a side view of said first embodiment of Fig. 1;
- Fig. 3: shows a cross sectional view of said first embodiment of Fig. 1 along the moving plane of the moving object;
- Fig. 4: shows a detailed view of an end portion of a multi-strand electrical cable in a first and a second sensing position over a diffusing plate;
- Fig. 5: shows a second embodiment of the shape detection device for detecting a moving object according to the present invention;
- Fig. 6: shows a side view of said second embodiment of Fig. 5;
- Fig. 7: shows a cross sectional view of said second embodiment of Fig. 4;
- Fig. 8: shows a third embodiment of the shape detection device for detecting a moving object according to the present invention;
- Fig. 9: shows a side view of said third embodiment of Fig. 8;
- Fig. 10: shows a cross sectional view of said third embodiment of Fig. 8.
- Fig. 11: shows an image composed of a plurality of line images captured with a line sensor system in the present invention.

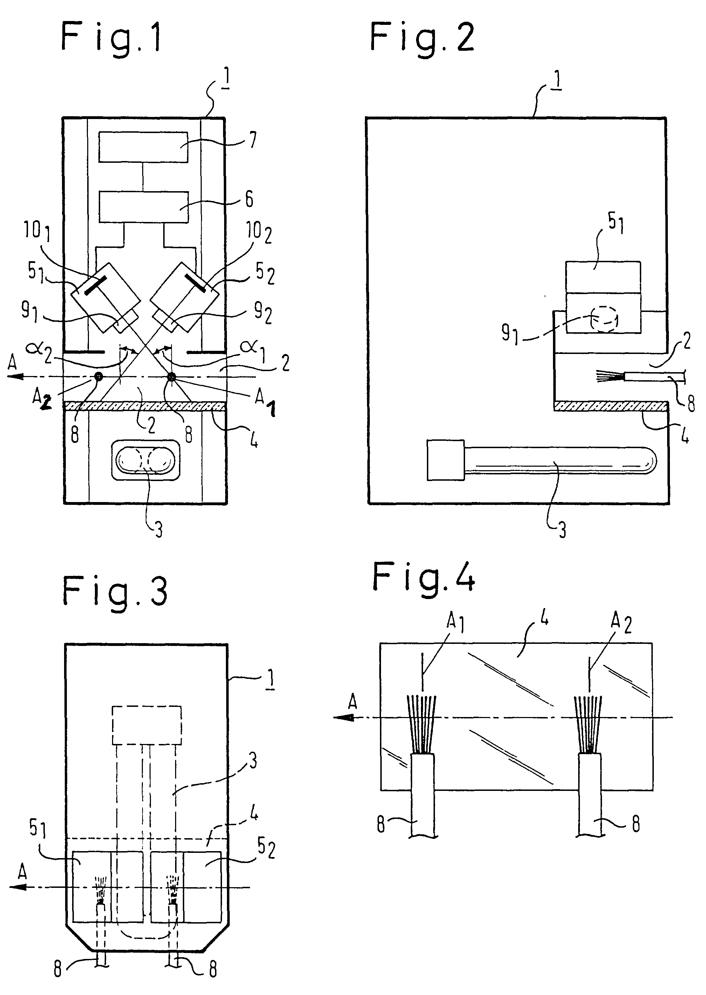

Figs. 1 - 4 show a first embodiment of a shape detection device according to the present invention. Said embodiment comprises a housing 1, a slit portion 2 formed at said housing 1, an illuminating system composed of a light source 3 and transparent light diffusing plate 4, and a shape detecting and evaluating system composed of first and second line sensor systems 5₁, 5₂ for capturing line images, electronic image composing means 6 for composing images produced by said first and second line sensor systems 5₁, 5₂, and electronic monitoring and evaluating means 7 for monitoring and evaluating the images composed by said composing means 6.

The afore-described device is provided for optically sensing end portions of multi-strand electrical cables or other objects 8 in a manner as described in more detail hereinbelow. Preferably the moving object 8 is an elongated object. For that purpose, a high number of those cables or other objects 8 may be releasably mounted, side by side, on a movable belt-like carrier or rotatable disc-like carrier (not shown in the drawings) in such a manner that during movement of said carrier, end portions of said objects 8 successively extend into said slit portion 2 of said housing 1 as best may be seen from Fig. 2, and pass through said slit portion 2 along a path and in a direction indicated by the arrow A as best may be seen from Fig. 4.

If the objects 8 are formed by electrical cables, the end portions thereof each include bundles of strands visually appearing after removal of insulating mantle end sections thereof, as shown in Figs. 2, 3 and 4.

As shown in Figs. 1, 3 and 4, each one of said high number of objects 8, when passing through said slit portion 2 of said housing 1, at first passes a first sensing position A₁, and subsequently passes a second sensing position A₂. It shall be understood that Figs. 1, 3 and 4 simultaneously illustrate subsequent passing of one and the same object 8 at said first and second sensing positions A₁, A₂, without showing leading and trailing other objects of equal structure and arrangement.

As may be seen from Figs. 1 to 4, the path of successive movement of the objects 8 through the slit portion 2 of the housing 1 is closely above, but without touching the diffusing plate 4, and said first and second sensing positions A₁, A₂ are situated along said path above the area of said diffusing plate 4. This means that the respective object 8 in each of said first and second sensing positions A₁, A₂ is fully illuminated from below by light emitted by the light source 3 and penetrating through and diffused by said transparent diffusing plate 4. Instead of only one light source 3, two or more light sources may be provided for achieving a uniform distribution of light intensity to be obtained on the upper surface of said diffusing plate 4. In addition to that, it is possible to provide further illumination systems being arranged in the same direction as a photographing direction of the line sensor systems.

Now, the structure and arrangement of the first and second line sensor systems 5₁, 5₂ are described in more detail.

Said first line sensor system 5₁ has a first optical imaging lens 9₁ whose optical axis is inclined against a perpendicular to the moving direction A by a first sensing angle α₁. Similarly, said second line sensor system 5₂ has a second optical imaging lens 9₂ whose optical axis is inclined against a perpendicular to the moving direction A by a second sensing angle α₂, preferably satisfying the condition α₂ = -α₁.

Said line sensor systems 5₁, 5₂ respectively include first and second line-shaped light-sensitive receivers 10₁, 10₂. The orientation of the first and second line-shaped light-sensitive receivers 10₁, 10₂ can be in any orientation suitable to detect the end portions of multi-strand electrical cables or other objects. However, for allowing a high processing speed of the image composing means 6 and the monitoring and evaluating means 7, the first and second line shaped receivers 10₁, 10₂ are preferably extending in parallel to the axial extension of said first and second sensing positions A₁, A₂, respectively. Said first and second line-shaped light-sensitive receivers 10₁, 10₂, each are preferably formed by a line-shaped CCD having, for example, 128 pixel elements arranged in one line. These line-shaped CCDs are cheap standard components distinguished by a very short read out time, which are not requiring a complicated read out control as, for example, two dimensional CCD arrays.

The short read out time of line-shaped CCDs commercially available today, allows around 10⁴ (10EXP 4) scans per second, this permitting a high-speed traveling speed of the moving object is of around 2000mm/s.

In addition, the device as described hereinabove, permits to omit a high speed shutter necessary in the prior art to avoid blurred images.

Said line sensor systems 5₁, 5₂ are arranged so that the optical axes of their imaging lens 9₁, 9₂ intersect the axes of extension of said first and second sensing positions A₁, A₂. Moreover, the refractive power of said imaging lenses 9₁, 9₂ is such that optical images of areas of said first and second sensing positions A₁, A₂, respectively, are focused onto said line-shaped light-sensitive receivers 10₁, 10₂, respectively. Thus, first and second shadow images of each of an object 8 are produced on said receivers 10₁, 10₂, respectively, when said object 8 successively passes said first and second sensing positions A₁, A₂. Successive passing of the objects 8 through said slit portion 2 of the housing 1 and particularly through the sensing positions A₁, A₂ may occur at uniform high speed, without requiring providing and operating any photographic shutters in the light paths between the sensing positions A₁, A₂ and the light-sensitive receivers 10₁, 10₂, respectively, of said line sensor systems 5₁, 5₂.

To prevent a confusion of the respective line images in the case that several moving objects 8 are passing the first sensing position A₁ before passing the second sensing position A₂, the electronic composing means 6 takes into consideration the travel time of the moving object 8 from the first sensing position A₁ to the second sensing position A₂.

The light-sensitive receivers 10₁, 10₂ of the line sensor systems 5₁, 5₂, respectively, produce first and second image signals corresponding to the first and second shadow images of each object 8 or of portions thereof, when successively passing said first and second sensing positions A₁, A₂.

Said first and second electrical image signals produced by said first and second light-sensitive receivers 10₁, 10₂, respectively are transmitted to said electronic image composing means 6 which compose the first and second shadow images produced on said first and second light-sensitive receivers 10₁, 10₂, to a composite shadow image of the respectively sensed object 8 taking into account the time interval of passage of the object 8 at said first and second sensing positions A₁, A₂. Said image composing means 6 include a two-dimensional image storage memory.

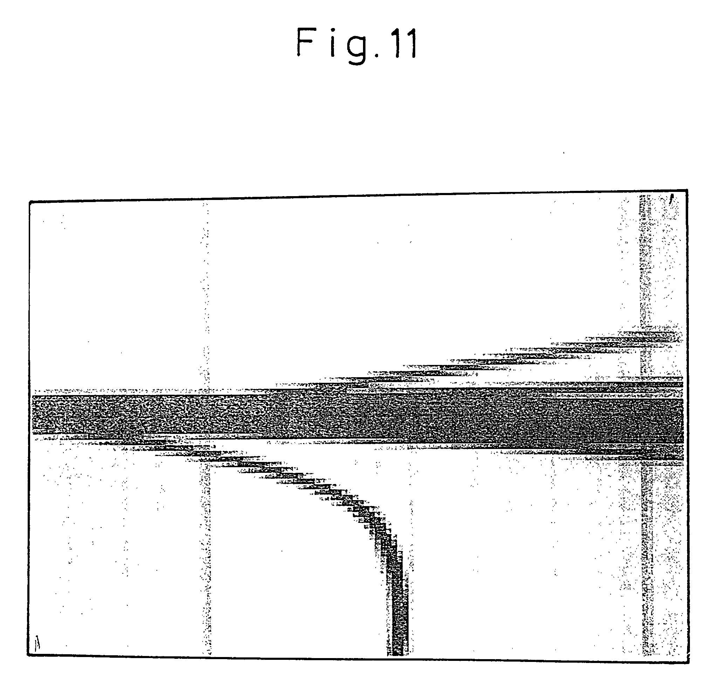

Said composite shadow image is displayed by said monitoring and evaluating means 7. An example of such a displayed composite shadow image is shown in Fig. 11 illustrating, as an object 8, an electrical multi-strand cable in which two of said strands are bent away from the main axis of said cable. Any cables showing such bent-away strands may be identified by said monitoring and evaluating means 7 as cables being improper for subsequent crimping, and therefore to be removed prior to continuation for traveling toward a crimping station.

Thus, said first and second line sensor systems 5₁, 5₂ constitute a plurality of means for capturing line-shaped images of a fast moving object 8, from different perspectives or viewing angles. Therefore, the aforementioned composite shadow image as illustrated in Fig. 11 represents an image of the object 8 so as having been obtained from an increased viewing angle.

The same advantage may be achieved if the distance between the first and second sensing positions A₁, A₂, is reduced to zero, provided the angles α₁ and α₂ are maintained without reduction. This, however, would require more space for accommodating the first and second line sensor systems 5₁, 5₂ within the housing 1. Thus, crossing of the optical axes of the line sensor systems 5₁, 5₂ as provided in Figs. 1 to 4 allows reduction of space needed for camera accommodation in the housing 1.

In the following, a method to operate the shape detection device according to the first embodiment will be described.

In a first capturing step, line images of a moving object 8 are captured at line-shaped sensing positions A₁, A₂ in a moving plane of the moving object 8, from different sensing angles α₁, α₂ relative to a perpendicular to a moving direction A of the fast moving object 8.

Then images are produced from said line images followed by monitoring and evaluating the composed images to detect the shape of the moving object 8.

To further improve the above method, the line images can be captured in parallel to the respective one of a plurality of line-shaped sensing positions A₁, A₂ which can be parallel to an elongation of the moving object 8 in the respective sensing position A₁, A₂.

It is also possible in the capturing step to capture line images of the moving object 8 at different line-shaped sensing positions A₁, A₂ in the moving path of the moving object 8.

The moving object 8 is illuminated at least from such side of the moving path of the fast moving object 8, which side is opposite to the side directed toward the line sensor systems 5₁, 5₂.

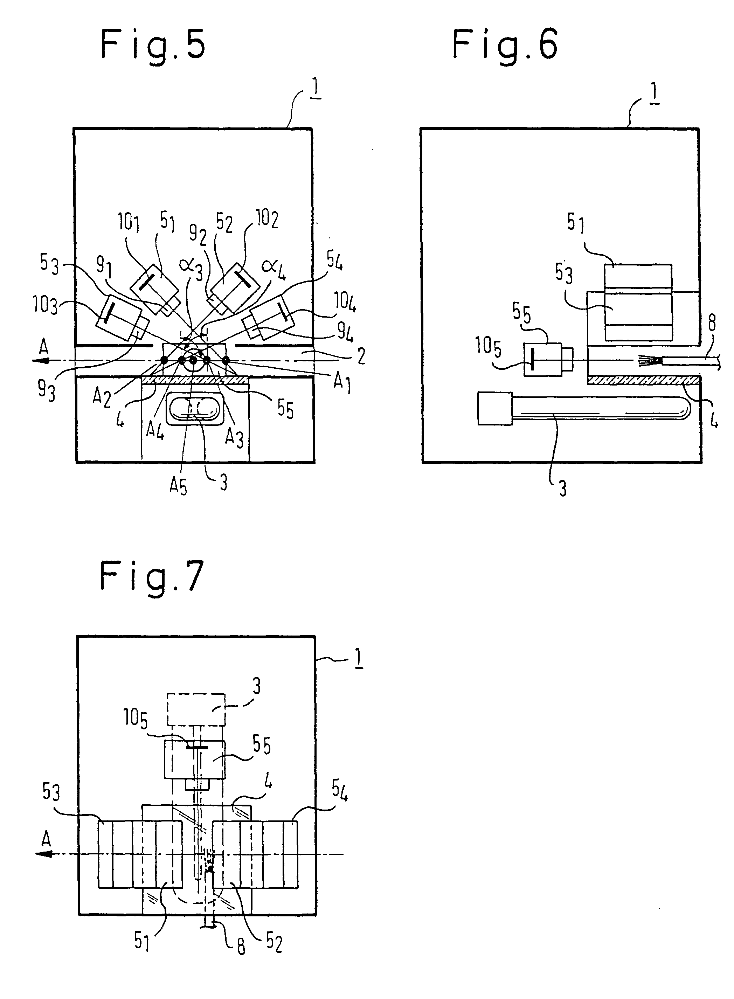

Figs. 5, 6 and 7 are showing a second embodiment of the shape detection device for detecting a moving object, according to the present invention.

The second embodiment of the shape detection device for a moving object 8 is analogous to the arrangement of the afore-described first embodiment of the shape detection device for a moving object, except that two further line sensor systems 5₃, 5₄, which are similar to the line sensor systems 5₁, 5₂ above, are provided, each having an optical axis inclined in a different sensing angle α₃, α₄ to the moving direction A of the moving object 8. In addition to that, a further line sensor system 5₅ is arranged with a line shaped sensing position A₅ which is perpendicular to the moving plane of the moving object 8. Therewith, it is possible to detect a cross section of the moving object 8.

In this arrangement, the viewing angle of the shape detection is further increased in comparison to the first embodiment.

The two line sensor systems 5₃ and 5₄ produce third and fourth image signals corresponding to third and fourth shadow images from further perspectives of each object 8 or of portions thereof, when the objects 8 are successively passing the third and fourth sensing positions A₃, A₄. The fifth line sensor system 5₅ produces a fifth image signal which is transmitted to the electronic image composing means 6 to compose a corresponding cross-sectional image of the object 8 when the object 8 successively passes a fifth sensing position A₅. The cross-sectional image is then displayed by said monitoring and evaluating means 7 to detect cables with bent-away strands to be removed prior to being forwarded to a further processing step.

With this second embodiment, it is possible to further increase the reliability of the shape detection respectively the detection of cables with strands bent away, as the viewing angle of detection is further increased.

The method for the operation of the second embodiment of the shape detection device for a moving object 8 of the present invention is analogous to the one described with reference to the first embodiment of the shape detection device except that in the capturing step, further line images are captured at a line shaped sensing position A₅ perpendicular to the moving plane of the fast moving object 8.

In the afore-described first and second embodiments of a device and method according to the present invention, a plurality of two line sensor systems 5₁, 5₂, or a plurality of four line sensor systems 5₁ ..., 5₄ are provided. However, according to modifications of said embodiments it is also possible to provide an even higher quantity of line sensor systems 5₁, ..., 5ₙ, wherein n being an integer preferably an even number. Then, the method of operation of the shape detection device according to the present invention is as follows:

In a first capturing step, line images of a moving object 8 are captured at line-shaped sensing positions A₁, A₂, ..., Aₙ in a moving plane of the moving object 8, from different sensing angles α₁, α₂, ..., αₙ relative to a perpendicular to a moving direction A of the fast moving object 8.

Then images are produced from said line images followed by monitoring and evaluating the composed images to detect the shape of the moving object 8.

To further improve the above method, the line images can be captured in parallel to the respective one of a plurality of line-shaped sensing positions A₁, A₂, ..., Aₙ which can be parallel to an elongation of the moving object 8 in the respective sensing position A₁, A₂, ..., Aₙ.

It is also possible in the capturing step to capture line images of the moving object 8 at different line-shaped sensing positions A₁, A₂, ..., Aₙ in the moving path of the moving object 8.

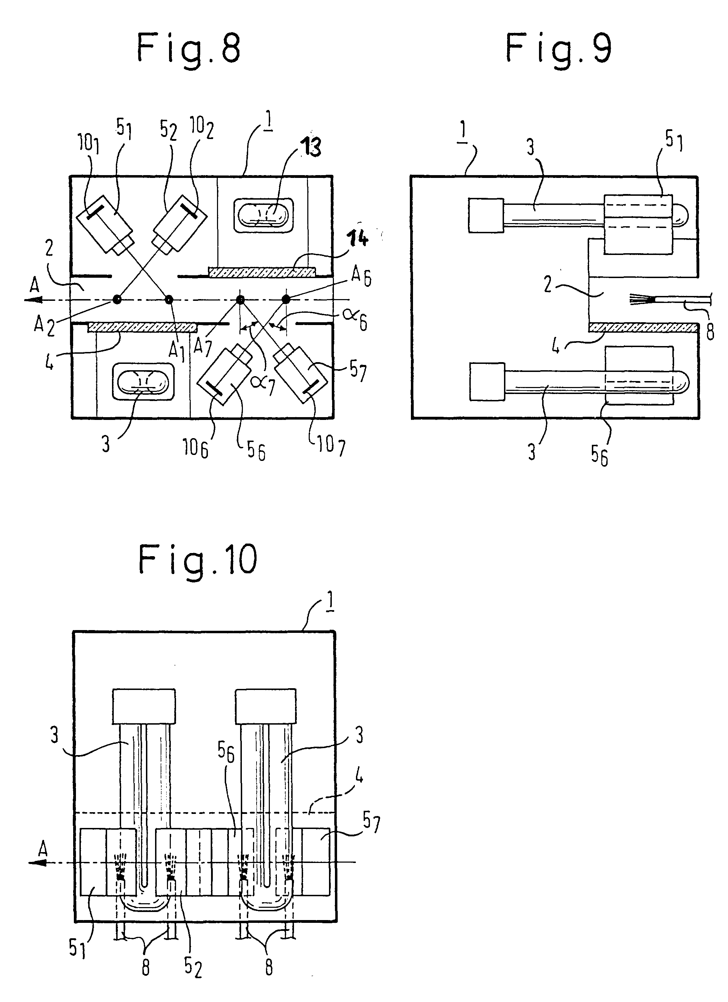

Figs. 8 - 10 show a third embodiment of the shape detection device according to the present invention. The arrangement of said embodiment is analogous to that of the first embodiment, except that in addition to the two line sensor systems 5₁, 5₂ and the first illuminating system, two further line sensor systems 5₆, 5₇, and a second illuminating system are provided in a reversed arrangement on opposite sides of the moving path of the moving object 8. The sensing angles α₆, α₇ of the two further line sensor systems 5₆, 5₇ are bigger than 90° and smaller than 270°, for detecting line shaped sensing positions A₆ and A₇.

As shown in Figs. 8 - 10, each one of said high number of objects 8, when passing through the slit portion 2, passes a sixth sensing position A₆, a seventh sensing position A₇, a first sensing position A₁, and a second sensing position A₂. As may be seen from Figs. 8 - 10, the second illumination system composed of a light source 13, and a diffusion plate 14 is provided closely above the path of successive movement of the moving object 8 to illuminate the two sensing positions A₆ and A₇ from above.

Instead of providing only illumination systems illuminating the sensing positions A₁, A₂, A₆ and A₇ from opposite sides of the moving path as the line sensor systems, illumination systems may be used which illuminate the sensing positions A₁, A₂, A₆ and A₇ substantially in the same direction as the photographing direction. The two line sensor systems 5₆ and 5₇ have the same construction and are arranged in a similar manner as the ones discussed with reference to the first embodiment. Said line sensor systems 5₆, 5₇ are producing sixth and seventh shadow images of each of an object 8 are produced on receivers 10₆ and 10₇, respectively, when said object 8 passes through the sensing positions A₆, A₇. The light-sensitive receivers 10₆ and 10₇ produce sixth and seventh shadow images of each of the object 8 or of positions thereof, from the side of the moving path which is opposite to the light-sensitive receivers 10₁ and 10₂ in the first and the second line sensor systems 5₁, 5₂, when successively passing said sixth and seventh positions A₆, A₇.
Therewith, the moving object is detected substantially without a blind angle.

The method for the operation of the third embodiment of the shape detection device for a moving object 8 of the present invention is analogous to the one described with reference to the first embodiment of the shape detection device.

In a modification of said third embodiment, instead of four line sensor systems 5₁, 5₂, 5₆, 5₇, more than four video cameras (n video cameras 5₁ ..., 5ₙ) may be provided. Also in this modification, the method of operation is similar to the method of operation of said third embodiment, except that in the capturing step, further line images are captured with a sensing angle α₁, α₂, ... αₙ bigger than 90° and smaller than 270°.

## Claims

1. A shape detection device for imaging a moving elongated object (8), comprising:
- a plurality of separate image capturing means (5₁, 5₂, ..., 5ₙ), each comprising a light-sensitive receiver (10₁, 10₂, ..., 10ₙ) and an optical lens (9₁, 9₂, ..., 9ₙ) capable of producing, when said elongated object is moving in a moving plane in a predetermined moving direction (A) and passing a line-shaped sensing position (A₁, A₂, ..., Aₙ) extending in parallel to an axial extension of said elongated object, a line image of said object (8) on said light-sensitive receiver, wherein said separate image capturing means of said plurality are arranged relative to said moving plane in such a manner that optical axes of the optical lenses of said plurality of separate image capturing means form different sensing angles (α₁, α₂, ..., αₙ) relative to a direction being perpendicular to said moving direction of said object;
- image composing means (6) connected to said light-sensitive receivers (10₁, 10₂, ..., 10ₙ) of said plurality of separate image capturing means (5₁, 5₂, ..., 5ₙ) for composing the images respectively produced by said separate image capturing means to a composite image of said elongated object (8); and
- monitoring and evaluating means (7) for monitoring and evaluating said composite image formed by said image composing means (6) to detect the shape of the moving object.

2. A shape detection device according to claim 1, wherein said light-sensitive receivers (10₁, 10₂, ..., 10ₙ) of said plurality of image capturing means (5₁, 5₂, ..., 5ₙ) are line-shaped and respectively extend in parallel to an axial extension of said line-shaped sensing positions (A₁, A₂, ..., Aₙ).

3. A shape detection device according to claim 2, wherein said line-shaped light-sensitive receivers (10₁, 10₂, ..., 10ₙ) are line-shaped CCDs.

4. A shape detection device according to any of the preceding claims, wherein at least part of said plurality of separate image capturing means (5₁, 5₂, ... 5ₙ) are arranged so that the optical axes of said optical lenses (9₁, 9₂, ..., 9ₙ) are crossing each other in an area between said optical lenses and said moving plane provided for movement of said object (8).

5. A shape detection device according to any of the preceding claims, wherein a first group of separate image capturing means (5₁, 5₂) and a second group of separate image capturing means (5₆, 5₇) are arranged on opposite sides of said moving plane.

6. A shape detection device according to any of the preceding claims, wherein illuminating means (3, 4) are provided on one side of said moving plane and separate image capturing means (5₁, 5₂, ... 5ₙ) are arranged on the opposite side of said moving plane, for producing shadow images of said object (8) when illuminated by said illuminating means.

7. A shape detection device according to claim 6, wherein said illuminating means (3, 4) comprise at least one light source (3) and a transparent light diffusing plate (4) extending in parallel to said moving plane.

8. A shape detection device according to claim 6 or 7, wherein
- first illuminating means (3, 4) and second illuminating means (13, 14) are provided on opposite sides of said moving plane;
- a first group of separate image capturing means (5₁, 5₂) is arranged opposite said first illuminating means; and
- a second group of separate image capturing means (5₆, 5₇) is arranged opposite said second illuminating means;
- so that said first group of separate image capturing means and said second group of separate image capturing means are arranged on opposite sides of said moving plane.

9. A shape detection device according to any of the preceding claims, wherein the plurality of image capturing means (5₁, 5₂, ... 5ₙ) is arranged so as to form a sensing angle (α₁, α₂, ... αₙ) bigger than 90° and smaller than 270°.

10. A shape detection device according to any of the preceding claims, wherein said image capturing means (5₁, 5₂, ... 5ₙ) are arranged so as to produce images of said object (8) at different sensing positions (A₁, A₂ ... Aₙ).

11. A shape detection device according to any of the preceding claims, further comprising an image capturing means (5_{5'}) for detecting a line shaped sensing position (A_{5'}) perpendicular to said moving plane.

12. A shape detection device according to any of the preceding claims, wherein said image composing means (6) comprise two-dimensional image storage means.

13. A shape detection device according to any of the preceding claims, provided for imaging a moving object being formed by an elongated portion of a cable.

14. A shape detection device according to claim 12 or 13, provided for imaging a moving object being formed by an end portion of a multi-strand electric cable.

15. A shape detecting method for a moving elongated object, comprising the steps of:
- optically sensing said elongated object, when moving in a moving plane in a predetermined moving direction (A) and passing a line-shaped sensing position (A₁, A₂, ..., Aₙ) extending in parallel to an axial extension of said elongated object and producing line image of said object (8) under different sensing angles (α₁, α₂, ..., αₙ) relative to a direction being perpendicular to said moving direction of said object;
- composing the images respectively produced under said different sensing angles (α₁, α₂, ..., αₙ) to a composite image of said elongated object; and
- monitoring and evaluating said composite image to detect the shape of the moving object.

16. A shape detecting method according to claim 15, wherein said images are line-shaped and extend in parallel to said line-shaped sensing position (A₁, A₂, ..., Aₙ).

17. A shape detecting method according to claim 15 or 16, wherein the elongated object is optically sensed in different sensing positions (A₁, A₂, ..., Aₙ) along a path of movement of said object.

18. A shape detecting method according to any of claims 15 to 17, wherein optical axes of optical sensing means used for optically sensing said elongated object and related to said different sensing angles (α₁, α₂, ..., αₙ) for forming said composite image of said elongated object are crossing each other.

19. A shape detecting method according to any of claims 15 to 18, wherein line images of the moving elongated object are produced by sensing the elongated object from opposite sides of a path of movement of the object.

20. A shape detecting method according to any of claims 15 to 19, comprising the step of illuminating the elongated object, for producing shadow images of said object.

21. A shape detecting method according to any of claims 15 to 20, wherein said sensing angles (α₁, α₂, ..., αₙ) are bigger than 90° and smaller than 270°.

22. A shape detecting method according to any of claims 15 to 21, comprising the step of sensing the elongated object in a sensing position (A₅') perpendicular to the path of movement of the object.

23. A shape detecting method according to any of claims 15 to 22, provided for sensing an elongated object formed by an elongated portion of a cable.

24. A shape detecting method according to claim 23, provided for sensing an elongated object formed by an end portion of a multi-strand electric cable.

## Patentansprüche

1. Formerfassungsvorrichtung zum Abbilden eines sich bewegenden länglichen Objekts (8), die folgendes aufweist:
- eine Vielzahl einzelner Bilderfassungseinrichtungen (5₁, 5₂, ..., 5ₙ), die jeweils einen lichtempfindlichen Empfänger (10₁, 10₂, ..., 10ₙ) aufweisen, und eine optische Linse (9₁, 9₂, ..., 9ₙ), die dann, wenn sich das längliche Objekt in einer Bewegungsebene in einer vorbestimmten Bewegungsrichtung (A) bewegt und eine linienförmige Erfassungsposition (A₁, A₂, ..., Aₙ) durchläuft, die sich parallel zu einer axialen Ausdehnung des länglichen Objekts erstreckt, eine Linienabbildung des Objekts (8) bei dem lichtempfindlichen Empfänger erzeugen kann, wobei die einzelnen Bilderfassungseinrichtungen der Vielzahl relativ zur Bewegungsebene auf eine derartige Weise angeordnet sind, daß optische Achsen der optischen Linsen der Vielzahl von einzelnen Bilderfassungseinrichtungen unterschiedliche Erfassungswinkel (α₁, α₂, ..., αₙ) relativ zu einer Richtung bilden, die senkrecht zur Bewegungsrichtung des Objekts ist;
- eine Bildzusammensetzungseinrichtung (6), die mit den lichtempfindlichen Empfängern (10₁, 10₂, ..., 10ₙ) der Vielzahl von einzelnen Bilderfassungseinrichtungen (5₁, 5₂, ..., 5ₙ) verbunden ist, zum Zusammensetzen der Bilder, die jeweils durch die einzelnen Bilderfassungseinrichtungen erzeugt sind, zu einem zusammengesetzten Bild des länglichen Objekts (8); und
- eine Überwachungs- und Bewertungseinrichtung (7) zum Überwachen und Bewerten des zusammengesetzten Bildes, das durch die Bildzusammensetzungseinrichtung (6) gebildet ist, um die Form des sich bewegenden Objekts zu erfassen.

2. Formerfassungsvorrichtung nach Anspruch 1, wobei die lichtempfindlichen Empfänger (10₁, 10₂, ..., 10ₙ) der Vielzahl von Bilderfassungseinrichtungen (5₁, 5₂, ..., 5ₙ) linienförmig sind und sich jeweils parallel zu einer axialen Ausdehnung der linienförmigen Erfassungspositionen (A₁, A₂, ..., Aₙ) erstrecken.

3. Formerfassungsvorrichtung nach Anspruch 2, wobei die linienförmigen lichtempfindlichen Empfänger (10₁, 10₂, ..., 10ₙ) linienförmige CCDs sind.

4. Formerfassungsvorrichtung nach einem der vorangehenden Ansprüche, wobei wenigstens ein Teil der Vielzahl von einzelnen Bilderfassungseinrichtungen (5₁, 5₂, ..., 5ₙ) so angeordnet ist, daß die optischen Achsen der optischen Linsen (9₁, 9₂, ..., 9ₙ) einander in einem Bereich zwischen den optischen Linsen und der für eine Bewegung des Objekts (8) vorgesehenen Bewegungsebene kreuzen.

5. Formerfassungsvorrichtung nach einem der vorangehenden Ansprüche, wobei eine erste Gruppe von einzelnen Bilderfassungseinrichtungen (5₁, 5₂) und eine zweite Gruppe von einzelnen Bilderfassungseinrichtungen (5₆, 5₇) an entgegengesetzten Seiten der Bewegungsebene angeordnet sind.

6. Formerfassungsvorrichtung nach einem der vorangehenden Ansprüche, wobei Belichtungseinrichtungen (3, 4) an einer Seite der Bewegungsebene vorgesehen sind und einzelne Bilderfassungseinrichtungen (5₁, 5₂, ..., 5ₙ) an der entgegengesetzten Seite der Bewegungsebene angeordnet sind, um Schattenbilder des Objekts (8) zu erzeugen, wenn es durch die Belichtungseinrichtungen belichtet wird.

7. Formerfassungsvorrichtung nach Anspruch 6, wobei die Belichtungseinrichtungen (3, 4) wenigstens eine Lichtquelle (3) und eine transparente Lichtdiffusionsplatte (4), die sich parallel zur Bewegungsebene erstreckt, aufweisen.

8. Formerfassungsvorrichtung nach Anspruch 6 oder 7, wobei
- erste Belichtungseinrichtungen (3, 4) und zweite Belichtungseinrichtungen (13, 14) an gegenüberliegenden Seiten der Bewegungsebene vorgesehen sind;
- eine erste Gruppe von einzelnen Bilderfassungseinrichtungen (5₁, 5₂) gegenüberliegend zu den ersten Belichtungseinrichtungen angeordnet ist; und
- eine zweite Gruppe von einzelnen Bilderfassungseinrichtungen (5₆, 5₇) gegenüberliegend zu den zweiten Belichtungseinrichtungen angeordnet ist;
- so daß die erste Gruppe von einzelnen Bilderfassungseinrichtungen und die zweite Gruppe von einzelnen Bilderfassungseinrichtungen an gegenüberliegenden Seiten der Bewegungsebene angeordnet sind.

9. Formerfassungsvorrichtung nach einem der vorangehenden Ansprüche, wobei die Vielzahl von Bilderfassungseinrichtungen (5₁, 5₂, ..., 5ₙ) angeordnet ist, um einen Erfassungswinkel (α₁, α₂, ..., αₙ) zu bilden, der größer als 90° und kleiner als 270° ist.

10. Formerfassungsvorrichtung nach einem der vorangehenden Ansprüche, wobei die Bilderfassungseinrichtungen (5₁, 5₂, ..., 5ₙ) angeordnet sind, um Bilder des Objekts (8) bei unterschiedlichen Erfassungspositionen (A₁, A₂, ..., Aₙ) zu erzeugen.

11. Formerfassungsvorrichtung nach einem der vorangehenden Ansprüche, die weiterhin eine Bilderfassungseinrichtung (5_{5'}) zum Erfassen einer linienförmigen Erfassungsposition (A_{5'}) senkrecht zur Bewegungsebene aufweist.

12. Formerfassungsvorrichtung nach einem der vorangehenden Ansprüche, wobei die Bildzusammensetzungseinrichtung (6) eine zweidimensionale Bildspeichereinrichtung aufweist.

13. Formerfassungsvorrichtung nach einem der vorangehenden Ansprüche, die zum Abbilden eines sich bewegenden Objekts vorgesehen ist, das durch einen länglichen Abschnitt eines Kabels gebildet ist.

14. Formerfassungsvorrichtung nach Anspruch 12 oder 13, die zum Abbilden eines sich bewegenden Objekts vorgesehen ist, das durch einen Endabschnitt eines mehrdrähtigen elektrischen Kabels gebildet ist.

15. Formerfassungsverfahren für ein sich bewegendes längliches Objekt, welches Verfahren die folgenden Schritte aufweist:
- optisches Erfassen des länglichen Objekts, wenn es sich in einer Bewegungsebene in einer vorbestimmten Bewegungsrichtung (A) bewegt und eine linienförmige Erfassungsposition (A₁, A₂, ..., Aₙ) durchläuft, die sich parallel zu einer axialen Ausdehnung des länglichen Objekts erstreckt, und zum Erzeugen von Linienbildern bzw. -abbildungen des Objekts (8) unter unterschiedlichen Erfassungswinkeln (α₁, α₂, ..., αₙ) relativ zu einer Richtung, die senkrecht zur Bewegungsrichtung des Objekts ist;
- Zusammensetzen der jeweils unter den unterschiedlichen Erfassungswinkeln (α₁, α₂, ..., αₙ) erzeugten Bilder zu einem zusammengesetzten Bild des länglichen Objekts; und
- Überwachen und Bewerten des zusammengesetzten Bilds, um die Form des sich bewegenden Objekts zu erfassen.

16. Formerfassungsverfahren nach Anspruch 15, wobei die Bilder linienförmig sind und sich parallel zur linienförmigen Erfassungsposition (A₁, A₂, ..., Aₙ) erstrecken.

17. Formerfassungsverfahren nach Anspruch 15 oder 16, wobei das längliche Objekt bei unterschiedlichen Erfassungspositionen (A₁, A₂, ..., Aₙ) entlang einem Bewegungspfad des Objekts optisch erfaßt wird.

18. Formerfassungsverfahren nach einem der Ansprüche 15 bis 17, wobei optische Achsen optischer Erfassungseinrichtungen, die zum optischen Erfassen des länglichen Objekts verwendet werden und auf die unterschiedlichen Erfassungswinkel (α₁, α₂, ..., αₙ) bezogen sind, zum Bilden des zusammengesetzten Bilds des länglichen Objekts einander kreuzen.

19. Formerfassungsverfahren nach einem der Ansprüche 15 bis 18, wobei Linienbilder des sich bewegenden länglichen Objekts durch Erfassen des länglichen Objekts von gegenüberliegenden Seiten eines Bewegungspfads des Objekts erzeugt werden.

20. Formerfassungsverfahren nach einem der Ansprüche 15 bis 19, das den Schritt zum Belichten des länglichen Objekts aufweist, um Schattenbilder des Objekts zu erzeugen.

21. Formerfassungsverfahren nach einem der Ansprüche 15 bis 20, wobei die Erfassungswinkel (α₁, α₂, ..., αₙ) größer als 90° und kleiner als 270° sind.

22. Formerfassungsverfahren nach einem der Ansprüche 15 bis 21, das den Schritt zum Erfassen des länglichen Objekts bei einer Erfassungsposition (A₅') rechtwinklig zum Bewegungspfad des Objekts aufweist.

23. Formerfassungsverfahren nach einem der Ansprüche 15 bis 22, das zum Erfassen eines durch einen länglichen Abschnitt eines Kabels gebildeten länglichen Objekts vorgesehen ist.

24. Formerfassungsverfahren nach Anspruch 23, das zum Erfassen eines durch einen Endabschnitt eines mehrdrahtigen elektrischen Kabels gebildeten länglichen Objekts vorgesehen ist.

## Revendications

1. Dispositif de détection de forme destiné à former en image un objet allongé mobile (8), comprenant :
- une pluralité de moyens d'acquisition d'image séparés (5₁, 5₂, ..., 5ₙ), chacun comprenant un récepteur photosensible (10₁, 10₂, ..., 10ₙ) et une lentille optique (9₁, 9₂, ..., 9ₙ) capable de produire, lorsque ledit objet allongé se déplace dans un plan de déplacement suivant une direction de déplacement prédéterminée (A) et franchissant une position de détection en forme de ligne (A₁, A₂, ..., Aₙ) s'étendant parallèlement à un prolongement axial dudit objet allongé, une image en ligne dudit objet (8) sur ledit récepteur photosensible, dans lequel lesdits moyens d'acquisition d'image séparés de ladite pluralité sont agencés par rapport audit plan de déplacement de telle manière que les axes optiques des lentilles optiques de ladite pluralité de moyens d'acquisition d'image séparés forment des angles de détection différents (α₁, α₂, ..., αₙ) par rapport à une direction qui est perpendiculaire à ladite direction de déplacement dudit objet,
- un moyen de composition d'image (6) relié auxdits récepteurs photosensibles (10₁, 10₂, ..., 10ₙ) de ladite pluralité de moyens d'acquisition d'image séparés (5₁, 5₂, ..., 5ₙ) afin de composer les images produites respectivement par lesdits moyens d'acquisition d'image séparés en une image composite dudit objet allongé (8), et
- un moyen de surveillance et d'évaluation (7) destiné à surveiller et à évaluer ladite image composite formée par ledit moyen de composition d'image (6) afin de détecter la forme de l'objet en déplacement.

2. Dispositif de détection de forme selon la revendication 1, dans lequel lesdits récepteurs photosensibles (10₁, 10₂, ..., 10ₙ) de ladite pluralité de moyens d'acquisition d'image (5₁, 5₂, ..., 5ₙ) sont en forme de ligne et s'étendent respectivement parallèlement à un prolongement axial desdites positions de détection en forme de ligne (A₁, A₂, ..., Aₙ).

3. Dispositif de détection de forme selon la revendication 2, dans lequel lesdits récepteurs photosensibles en forme de ligne (10₁, 10₂, ..., 10ₙ) sont des dispositifs à transfert de charge en forme de ligne (CCD).

4. Dispositif de détection de forme selon l'une quelconque des revendications précédentes, dans lequel au moins une partie de ladite pluralité de moyens d'acquisition d'image séparés (5₁, 5₂, ..., 5ₙ) est disposée de manière à ce que les axes optiques desdites lentilles optiques (9₁, 9₂, ..., 9ₙ) se croisent les uns les autres dans une zone entre lesdites lentilles optiques et ledit plan de déplacement prévu pour le déplacement dudit objet (8).

5. Dispositif de détection de forme selon Tune quelconque des revendications précédentes, dans lequel un premier groupe de moyens d'acquisition d'image séparés (5₁, 5₂) et un second groupe de moyens d'acquisition d'image séparés (5₆, 5₇) sont disposés sur des côtés opposés dudit plan de déplacement.

6. Dispositif de détection de forme selon l'une quelconque des revendications précédentes, dans lequel des moyens d'illumination (3, 4) sont prévus sur un côté dudit plan de déplacement et des moyens d'acquisition d'image séparés (5₁, 5₂, ..., 5ₙ) sont disposés sur le côté opposé dudit plan de déplacement, afin de produire des images d'ombres dudit objet (8) lorsqu'il est illuminé par ledit moyen d'illumination.

7. Dispositif de détection de forme selon la revendication 6, dans lequel ledit moyen d'illumination (3, 4) comprend au moins une source de lumière (3) et une plaque transparente (4) de diffusion de lumière s'étendant parallèlement audit plan de déplacement.

8. Dispositif de détection de forme selon la revendication 6 ou 7, dans lequel
- un premier moyen d'illumination (3, 4) et un second moyen d'illumination (13, 14) sont prévus sur des côtés opposés dudit plan de déplacement,
- un premier groupe de moyens d'acquisition d'image séparés (5₁, 5₂) est disposé de façon opposée audit premier moyen d'illumination, et
- un second groupe de moyens d'acquisition d'image séparés (5₆, 5₇) est disposé de façon opposée audit second moyen d'illumination,
- de sorte que ledit premier groupe de moyens d'acquisition d'image séparés et ledit second groupe de moyens d'acquisition d'image séparés sont disposés sur des côtés opposés dudit plan de déplacement.

9. Dispositif de détection de forme selon l'une quelconque des revendications précédentes, dans lequel la pluralité de moyens d'acquisition d'image (5₁, 5₂, ..., 5ₙ) est disposée de façon à former un angle de détection (α₁, α₂, ..., αₙ) plus grand que 90° et plus petit que 270°.

10. Dispositif de détection de forme selon l'une quelconque des revendications précédentes, dans lequel lesdits moyens d'acquisition d'image (5₁, 5₂, ..., 5ₙ) sont disposés de façon à produire des images dudit objet (8) à des positions de détection différentes (A₁, A₂, ..., Aₙ).

11. Dispositif de détection de forme selon l'une quelconque des revendications précédentes, comprenant en outre un moyen d'acquisition d'image (5_{5'}) destiné à détecter une position de détection en forme de ligne (A_{5'}) perpendiculaire audit plan de déplacement.

12. Dispositif de détection de forme selon l'une quelconque des revendications précédentes, dans lequel ledit moyen de composition d'image (6) comprend des moyens de mémorisation d'image bidimensionnel.

13. Dispositif de détection de forme selon l'une quelconque des revendications précédentes, prévu pour former en image un objet en déplacement qui est formé par une partie allongée d'un câble.

14. Dispositif de détection de forme selon la revendication 12 ou 13, prévu pour former en image un objet en déplacement qui est formé par une partie d'extrémité d'un câble électrique à brins multiples.

15. Procédé de détection de forme destiné à un objet allongé en déplacement, comprenant les étapes suivantes :
- détecter optiquement ledit objet allongé, lorsqu'il se déplace dans un plan de déplacement suivant une direction de déplacement prédéterminée (A) et franchit une position de détection en forme de ligne (A₁, A₂, ..., Aₙ) s'étendant parallèlement à un prolongement axial dudit objet allongé et produisant des images en ligne dudit objet (8) sous des angles de détection différents (α₁, α₂, ..., αₙ) par rapport à une direction qui est perpendiculaire à ladite direction de déplacement dudit objet,
- composer les images respectivement produites sous lesdits angles de détection différents (α₁, α₂, ..., αₙ) en une image composite dudit objet allongé, et
- surveiller et évaluer ladite image composite afin de détecter la forme de l'objet en déplacement.

16. Procédé de détection de forme selon la revendication 15, dans lequel lesdites images sont en forme de ligne et s'étendent parallèlement à ladite position de détection en forme de ligne (A₁, A₂, ..., An).

17. Procédé de détection de forme selon la revendication 15 ou 16, dans lequel l'objet allongé est détecté optiquement à des positions de détection différentes (A₁, A₂, ..., An) le long d'un trajet de déplacement dudit objet.

18. Procédé de détection de forme selon l'une quelconque des revendications 15 à 17, dans lequel les axes optiques des moyens de détection optique utilisés pour détecter optiquement ledit objet allongé et associés auxdits angles de détection différents (α₁, α₂, ..., αn) afin de former ladite image composite dudit objet allongé se croisent les uns les autres.

19. Procédé de détection de forme selon l'une quelconque des revendications 15 à 18, dans lequel les images en ligne de l'objet allongé en déplacement sont produites en détectant l'objet allongé depuis des côtés opposés d'un trajet de déplacement de l'objet.

20. Procédé de détection de forme selon l'une quelconque des revendications 15 à 19, comprenant l'étape consistant à illuminer l'objet allongé, afin de produire des images d'ombres dudit objet.

21. Procédé de détection de forme selon l'une quelconque des revendications 15 à 20, dans lequel lesdits angles de détection (α₁, α₂, ..., αₙ) sont plus grands que 90° et plus petits que 270°.

22. Procédé de détection de forme selon l'une quelconque des revendications 15 à 21, comprenant l'étape consistant à détecter l'objet allongé à une position de détection (A_{5'}) perpendiculaire au trajet de déplacement de l'objet.

23. Procédé de détection de forme selon l'une quelconque des revendications 15 à 22, prévu pour détecter un objet allongé formé d'une partie allongée d'un câble.

24. Procédé de détection de forme selon la revendication 23, prévu pour détecter un objet allongé formé par une partie d'extrémité d'un câble électrique à brins multiples.
